# EUROPEAN PATENT APPLICATION

(11) **EP 3 378 604 A1**
(43) Date of publication of application: **26.09.2018**
(21) Application number: 17161726.9
(22) Date of filing: 20.03.2017
(51) Int. Cl.: B25H 3/00, B62B 1/00

(54) **TOOL CART**

(71) Applicant: Kylmäteräs Oy, 00760 Helsinki (FI)
(72) Inventor: KARHU, Mika, 01400 VANTAA (FI)
(74) Representative: Berggren Oy, Helsinki & Oulu

(57) **Abstract**

The invention relates to a tool cart, which tool cart (10) has a box-like structure comprising at least one storage compartment (41, 42) and a planar upper outer surface, which is a work surface (11), which tool cart (10) is made of load bearing plate material such as of steel or stainless steel plates formed to the box-like structure. The tool cart (10) comprises large diameter wheels (26, 27), which are connected to each other by a shaft (28), and a handle structure (21, 22) comprising two handles (21, 22), one (21) of which is on a front end (15) of the tool cart (10) in its moving direction and one (22) of which is on a back end (14) of the tool cart (10) in its moving direction close to a support point formed by the shaft (28) of the wheels (26, 27).

## Description

The invention relates generally to a movable tool cart. Particularly the invention relates to a tool cart according to the preamble part of claim 1.

The prior art discloses various different types of movable tool boxes for storing and moving the tools to a work site and back to storage facilities. For example tool boxes comprising a handle for carrying the tool box with selected tools to the work site are very commonly used. These are often heavy to carry, especially if the tools inside are heavy. Also the order is often difficult to maintain due to limited number of compartments of the tool box for different equipment types. The prior art also discloses tool carts with small wheels for moving it short distances, for example at the work site to a closer location to the actual place of work. The small wheels limit the movability especially in case there is stairs or thresholds or steps along the route. Additionally the prior art discloses various types of carts, onto which the tool box is to be loaded for transfer thus two separate objects are to be handled and transferred to the work site. Often the tool carts known from prior art are also rather light structured causing instability and thus preventing the use of them for standing on or for work surface. Thus in the various types of tool carts known from prior art disadvantages occur for example relating to the balance, stability, movability, transferability and/or limitations in respect of variable usages.

An object of the invention is to create a tool cart, in which the problems relating to the balance, stability, movability, transferability and/or limitations in respect of variable usages are eliminated or at least minimized.

In particular an object of the invention is to create an improved tool cart, the improvements providing especially stability, balance and life time properties of tool cart during moving and during usage at the work site. Additionally an object is to improve the transferability and versatility of the tool cart.

In order to achieve the above mentioned objects the tool cart according to the invention is mainly characterized by the features of the characterizing clause of the independent claim 1. Advantageous embodiments and features of the invention are disclosed in the dependent claims.

In this description and the following claims by term "tool" is meant different types of instruments, working tools, utensils, equipment, accessories, devices, kits etc. which are to be placed in the cart for usage at a working site, which can be mounting, repair, assembly, tending, etc. site. The movable tool cart according to the invention is a tool cart, which is a from one place to another movable and transferrable storage for variable functions, which at the work site also can be used as a work surface or tending surface or a standing surface to reach to higher for work to be done at elevated levels. The tools can be working tools, first aid supplies, sport equipment etc. i.e. tools that are typically stored at a main location and then a certain, selected part of the tools are loaded and transferred, at least partially by manual moving of the tool cart, to a different location for usage, for example as working tools to a mounting, repair, maintenance or assembly site, or as sport equipment to a training or competition site or as first aid supplies to an event site. In this description and the claims the terms front end and back end are used in view of the moving direction of the tool cart when pulled by the pull and lift handle located at the front end of the tool cart. In turn terms front side and back side are used in view of the front side being the one from which openable storage compartments of the tool cart are opened.

According to one advantageous example the tool cart is used as a tool cart for repair, maintenance and assembly work done in ships, hotels, restaurants where the work location is typically located such that at least part of the transfer distance requires manual transport of the tool cart.

According to the invention the tool cart has a box-like structure comprising at least one storage compartment and a planar upper outer surface, which is usable as a work surface, which tool cart is made of load bearing plate material such as of steel or stainless steel plates formed to the box-like structure, wherein the tool cart comprises large diameter wheels, which are connected to each other by a shaft, and a handle structure comprising two handles one of which is on a front end of the tool cart in its moving direction and one of which is on a back end of the tool cart in its moving direction close to a support point formed by the shaft of the wheels.

The tool cart according to the invention is a movable tool cart functioning at the work site at least as a work surface and a tool box.

According to an advantageous feature of the invention the diameter of the wheel of the tool cart is 150 mm - 320 mm.

According to an advantageous feature of the invention distance of the shaft from the back end of the tool cart is 100 mm - 250 mm.

According to an advantageous feature of the invention the wheels are located is wheel spaces formed as recesses at the back end of the tool cart such that the wheels do not extend outside the main outlines box-like structure of the tool cart.

According to an advantageous feature of the invention the tool cart comprises two feet located on the bottom plate next to the front end of the tool cart.

According to an advantageous example of the invention the tool cart comprises two wheels, with a diameter of 150 mm - 320 mm and the wheels are located in moving direction of the tool cart at the back end and lower corner areas of the tool cart. Advantageously the wheels are connected to each other by a shaft located behind the centerline of gravity of the tool cart in respect of the moving direction of the tool cart. Thus the location of the wheels and their shaft in the tool cart is provided optimally in respect of the movability, portability and transfer properties such that when the tool cart is pulled and moving on the wheels the load of the tool cart is substantially minimized. The wheels of the tool cart are advantageously located in wheels spaces made as recesses in the box-like structure such that the wheels do not substantially extend out from the box-like structure of the tool cart.

Further the advantageous example of the tool cart according to the invention comprises a handle structure comprising two handles, one of which is located at the front end of the tool cart in moving direction of the tool cart and near the work surface level of the tool cart and advantageously extending substantially over the length of the front end and another of which is located at the back end of the tool cart in moving direction and substantially at level of the upper point of the wheels and close to the support point formed by the shaft of the wheels. Thus the front end handle is at higher level than the back end handle and easy portability in stairs is provided.

The tool cart is advantageously made of load bearing metallic plate material, for example of stainless steel, having thickness of 0,8 mm - 5 mm. The tool cart is advantageously made to a box-type structure. Thus by the invention is provided a tool cart for various usages, in which due to the advantageous handle structure especially in manual moving an easy and stabile portability is achieved. The tool cart has good stability and balance due to the box-like structure, when located at place for functioning as a standing platform or a work surface. The large diameter wheels also enhance the easy movability, especially over thresholds and like.

The good movability of the tool cart according to the invention is provided by the large diameter wheels and the location of the shaft connecting the wheels behind the located behind the centerline of gravity of the tool cart.

Advantageously the tool cart comprises several openable storing compartments, of drawer types and/or of closet types. The closet type storing compartments are advantageously provided with openable doors. Thus the storing and using possibilities of the tool cart provide many alternatives and are easy to keep in order. The storing compartments may also comprise detachable, replaceable boxes. Very advantageously close to the shaft of the wheels is located a storing compartment for heavy objects.

Advantageously the upper outer surface of the tool cart i.e. the work surface of the tool cart is planar thus providing a good work surface for various tasks. The work surface can also be used as a standing platform for work tasks at high locations.

Advantageously the bottom plate of the tool cart is of thick steel plate, thickness of which plate is advantageously 0,8 mm - 5 mm, thus providing for improved load bearing properties and also making it possible to move the tool cart also by a fork lift.

Advantageously the tool cart may comprise at its outer side/-s provided hooks or other fastening means for tools and like.

Advantageously the main measurements of the tool cart are defined taking in account the standard measurements of transport platforms and freight containers such that simultaneous transfer of tool carts is optimized. Advantageously length of the tool cart is 600 mm - 1000 mm, width of the tool cart is 500 mm - 800 mm and height of the tool cart is 500 mm - 800 mm.

In the following the invention is explained in detail with reference to the accompanying drawing to which the invention is not to be narrowly limited, in which drawing
in figure 1 is schematically shown an example of a tool cart from the front side,
in figure 2 is schematically shown the example of the tool cart according to figure 1 from the back side,
in figure 3 is schematically shown an example of a tool cart with extendable work surface from the front side,
in figure 4 is schematically shown the example of the tool cart according to figure 3 from the back side and
in figure 5 is schematically shown an example of a tool cart with storage compartments opened from the front side.

During the course of the following description like numbers and signs will be used to identify like elements according to the different views which illustrate the invention and its advantageous examples and features. In some cases reference sign repetition has been omitted in the figures for clarity reasons.

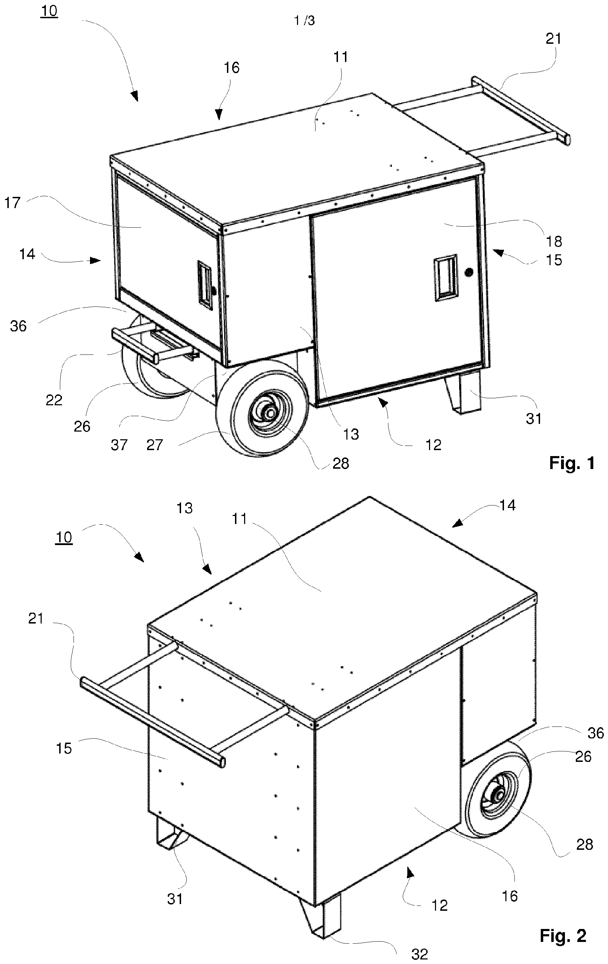

In the figures 1 and 2 is shown example of a tool cart 10, which is formed as a box-like structure comprising a planar, in typical working position of the tool cart 10 horizontal, work surface 11, opposite side to the work surface 11 in the box-like structure of the tool cart 10 is the bottom plate 12. In the box-like structure in the typical working position of the tool cart 10 are vertical sides: a front end 15, a back end 14, a front side 13 and a back side 16. In this example the back end 14 comprises an openable end door 17 and the front side 13 comprises an openable side door 18. The doors 17, 18 may be provided with locking means. At the front end 15 close to the work surface 11 in vertical direction is a pull and lift handle 21 and at the back end 14 is located a lift handle 22. The tool cart 10 comprises wheels 26, 27 located as recesses in the box-like structure made wheel spaces 36, 27 and connected to each other by a shaft 28. The tool cart 10 also comprises feet 31, 32 attached to the bottom plate 12 and located close to the front end 15 of the tool cart 10.

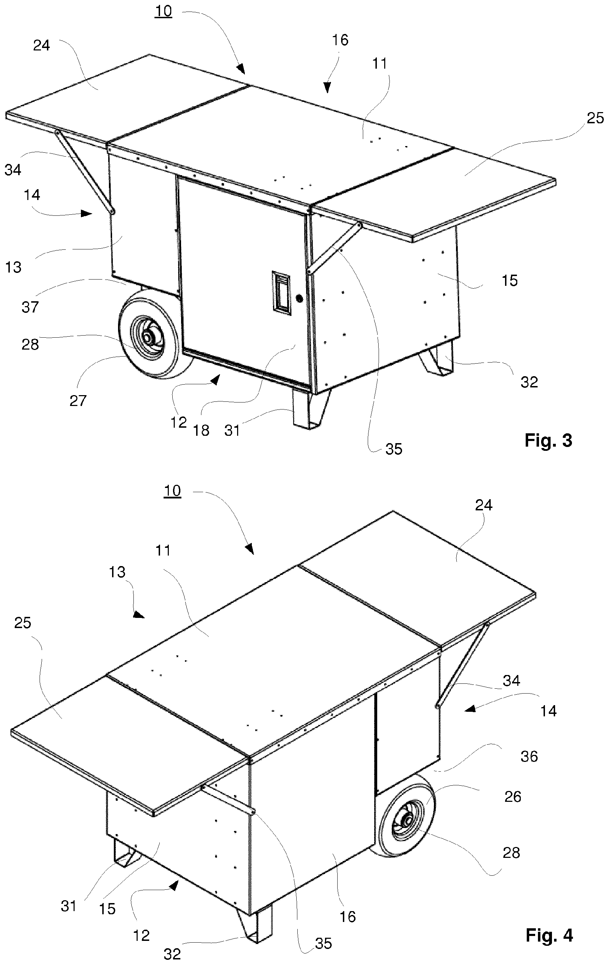

In the figures 3 and 4 is shown example of a tool cart 10, which mainly corresponds to the example of figures 1 and 2 but comprises additional works surface extensions 24, 25 for the work surface, one of which is an additional back end work surface 24 and another of which is and additional front end work surface 25, which are supported by support arms 34, 35, respectively to the back end 14 and to the front end 15. By this more work surface area is provided and the extended work surface can for example function as a laying surface for a patient for first aid purposes.

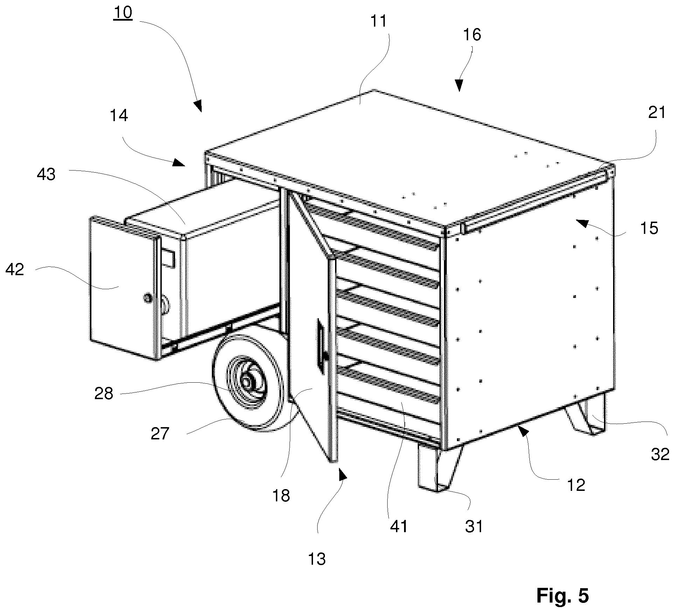

In the figure 5 shown example of a tool cart 10, which mainly corresponds to the example of figures 1 and 2 or figures 3 and 4, with some storage compartments 41, 42 opened. The side door 18 of the tool cart 10 opens to multiple drawers 41 and the front side 13 additionally comprises a drawer 42 with a replaceable tool box 43.

As shown in the examples of figures 1 - 5 the tool cart 10 has a box-like structure comprising at least one storage compartment 41, 42 and a planar upper outer surface, which is usable as a work surface 11. The tool cart 10 is made of load bearing plate material such as of steel or stainless steel plates formed to the box-like structure. The tool cart 10 comprises large diameter wheels 26, 27 connected to each other by a shaft 28. The tool cart 10 comprises the handle structure 21, 22 comprising two handles 21, 22, one 21 of which is on the front end 15 of the tool cart 10 in its moving direction and one 22 of which is on the back end 14 of the tool cart 10 in its moving direction close to a support point formed by the shaft 28 of the wheels 26, 27. The tool cart 10 is a movable tool cart 10 functioning at the work site at least as a work surface and a tool box. The wheels 26, 27 are located is wheel spaces 36, 37 formed as recesses at the back end 14 of the tool cart 10 such that the wheels 36, 37 do not extend outside the main outlines box-like structure of the tool cart 10. The shaft 28 is located behind the centerline of gravity of the tool cart 10 in respect of the moving direction of the tool cart 10. The handle structure comprising two handles 21, 22, one 21 of which is extending substantially over the length of the front end 15 and another 22 of which is located at the back end 14 of the tool cart 10 in moving direction and substantially at level of the upper point of the wheels 26, 27 and close to the support point formed by the shaft 28 of the wheels 26, 27. Thus the front end handle 21 is at higher level than the back end handle 22.

Above only some advantageous examples of the inventions has been described to which examples the invention is not to be narrowly limited and many modifications and alterations are possible within the invention.

### Reference signs used in the drawing

- 10: tool cart
- 11: work surface
- 12: bottom plate
- 13: front side
- 14: back end
- 15: front end
- 16: back side
- 17: end door
- 18: side door
- 21: pull and lift handle
- 22: lift handle
- 24: additional back end work surface
- 25: additional front end work surface
- 26: wheel, back side
- 27: wheel, front side
- 28: shaft
- 31: foot, front side
- 32: foot, back side
- 34: support arms for additional back end work surface
- 35: support arms for additional front end work surface
- 36: wheel space, back side
- 37: wheel space, front side
- 41: drawer
- 42: drawer
- 43: tool box

## Claims

1. Tool cart, which tool cart (10) has a box-like structure comprising at least one storage compartment (41, 42) and a planar upper outer surface, which is a work surface (11), which tool cart (10) is made of load bearing plate material such as of steel or stainless steel plates formed to the box-like structure **characterized in that** the tool cart (10) comprises large diameter wheels (26, 27), which are connected to each other by a shaft (28), and a handle structure (21, 22) comprising two handles (21, 22), one (21) of which is on a front end (15) of the tool cart (10) in its moving direction and one (22) of which is on a back end (14) of the tool cart (10) in its moving direction close to a support point formed by the shaft (28) of the wheels (26, 27).

2. The tool cart according to claim 1, **characterized in that** the handle (21) on the front end (15) is at a higher horizontal level than the handle (22) on the back end (14).

3. The tool cart according to claim 1 or 2, **characterized in that** outer diameter of the wheel (26, 27) of the tool cart (10) is 150 mm - 320 mm.

4. The tool cart according to any of claims 1 - 3, **characterized in that** distance of the shaft (28) from the back end (14) of the tool cart (10) is 100 mm - 250 mm.

5. The tool cart according to any of claims 1 - 4, **characterized in that** the wheels (26, 27) are located is wheel spaces (36, 37) formed as recesses at the back end (14) of the tool cart (10) such that the wheels do not extend outside the main outlines box-like structure of the tool cart (10).

6. The tool cart according to any of claims 1 - 5, **characterized in that** the tool cart comprises two feet (31, 32) attached to a bottom plate (12) of the tool cart (10) next to the front end (15) of the tool cart (10).

7. The tool cart according to any of claims 1 - 6, **characterized in that** the shaft (28) is located behind the centerline of gravity of the tool cart (10).

8. The tool cart according to any of claims 1 - 7, **characterized in that** the tool cart (10) is made of load bearing metallic plate material having thickness 0,8 mm - 5 mm.

9. The tool cart according to any of claims 1 - 8, **characterized in that** the tool cart (109 comprises several openable storing compartments, of drawer types and/or of closet types.

10. The tool cart according to any of claims 1 - 9, **characterized in that** the tool cart (10) formed as the box-like structure comprising the work surface 11, further comprise opposite side to the work surface (11) in the box-like structure of the tool cart (10) is the bottom plate (12), that in the box-like structure in the typical working position of the tool cart (10) comprises vertical sides: the front end (15), the back end (14), a front side (13) and a back side (16).

11. The tool cart according to any of claims 1 - 10, **characterized in that** length of the tool cart (10) is 600 mm - 1000 mm, width of the tool cart (10) is 500 mm - 800 mm and height of the tool cart (10) is 500 mm - 800 mm.

12. The tool cart according to any of claims 1 - 11, **characterized in that**, the tool cart (10) is a tool cart for assembly, repair, maintenance, sport and/or first aid purposes.

13. The tool cart according to any of claims 1 - 12, **characterized in that**, the tool cart (10) is a tool cart for repair, maintenance and assembly work done in ships, hotels, restaurants.
